# EUROPEAN PATENT APPLICATION

(11) **EP 4 693 550 A1**
(43) Date of publication of application: **11.02.2026**
(21) Application number: 25192652.3
(22) Date of filing: 29.07.2025
(51) Int. Cl.: H01M 10/04, H01M 10/625, H01M 10/647, H01M 50/244, H01M 50/249, H01M 50/209, H01M 50/289, H01M 10/6556

(54) **BATTERY MODULE**

(30) Priority: 09.08.2024 KR 20240106507
(71) Applicant: SAMSUNG SDI CO., LTD., Yongin-si, Gyeonggi-do 17084 (KR)
(72) Inventor: HWANG, Tae Sin, 16678 Suwon-si (KR)
(74) Representative: Marks & Clerk LLP

(57) **Abstract**

A battery module includes: a plurality of secondary batteries; a housing accommodating the plurality of secondary batteries; and a first bracket arranged to pass between at least two secondary batteries of the plurality of secondary batteries in a first direction and including a first end and a second end joined to the housing.

## Description

### BACKGROUND

### 1. Field

Aspects of embodiments of the present disclosure relate to a battery module.

### 2. Description of Related Art

Unlike primary batteries that cannot be charged, secondary batteries are batteries that can be charged and discharged. Low-capacity secondary batteries may be used in small, portable electronic devices, such as smartphones, feature phones, notebook computers, digital cameras, and camcorders, and large-capacity secondary batteries are widely used as motor driving power sources and power storage batteries in hybrid vehicles, electric vehicles, etc. Such secondary batteries include an electrode assembly including a positive electrode and a negative electrode, a case (or can) that accommodates the electrode assembly, and an electrode terminal connected to the electrode assembly.

The secondary battery may be used as a battery module formed by a plurality of secondary batteries connected in series and/or in parallel to provide high energy density. The battery module may be formed by connecting the plurality of secondary batteries to each other.

The above-described information disclosed in the art that is the described as the background of the present invention is provided for improving the understanding of the background of the present invention and may therefore include information that does not constitute prior art.

### SUMMARY

According to an aspect of one or more embodiments of the present invention, a battery module of which swelling may be restrained without a separate process and/or an additional component is provided.

However, aspects and technical problems to be solved by the present invention are not limited to the aspects and problems described above, and other aspects and problems not mentioned can be clearly understood by those skilled in the art from the description of the present invention described below.

According to one or more embodiments of the present invention, a battery module includes: a plurality of secondary batteries; a housing accommodating the plurality of secondary batteries; and a bracket ("first bracket") arranged to pass between at least two secondary batteries of the plurality of secondary batteries in a first direction and comprising a first end and a second end joined to the housing.

The first direction may be a direction parallel to a direction in which the plurality of secondary batteries is arranged in a row.

The housing may comprise: a lower plate defining a lower surface of the housing; and end plates defining side surfaces of the housing and supporting opposite ends of the plurality of secondary batteries, wherein the end plates comprise a first end plate and a second end plate which are opposite to each other.

The first bracket may comprise the first end joined to the first end plate and the second end joined to the second end plate.

The first bracket may comprise: a main body part passing between the at least two second batteries of the plurality of secondary batteries; and a bent portion that is connected to the main body part, bent from the main body part, and located at an end of the first bracket, wherein the bent portion is welded to the end plates such that the end plates are supported by the first bracket.

Secondary batteries of the plurality of secondary batteries may be arranged in n rows, n being an integer greater than or equal to 1, and the end plates may comprise m pairs of end plates, m being an integer greater than or equal to 1 and less than or equal to n.

The housing may comprise: a lower plate defining a lower surface of the housing; side plates defining side surfaces of the housing and supporting opposite sides of the plurality of secondary batteries; and end brackets defining side surfaces of the housing and supporting opposite ends of the plurality of secondary batteries, wherein the end brackets comprise a same material as a material of the first bracket.

Each of the end brackets may comprise: an end body part supporting an opposite end of the plurality of secondary batteries; and an end bent portion that is connected to the end body part, bent from the end body part, and joined to a side plate of the side plates.

The battery module may comprise a cooling plate comprising a cooling flow path, and the end bracket may cover an inlet/outlet of the cooling flow path and may be located on the cooling flow path.

The housing may further comprise an end block arranged between an end bracket of the end brackets and the secondary battery and supporting the end bracket.

The first bracket may satisfy a tensile force of 30,000 N or greater.

The first bracket may have a thickness of 1.0 mm or greater.

The battery module may further comprise a second bracket arranged to pass between at least two of the plurality of secondary batteries in a second direction and comprising a first end and a second end joined to the housing, and the second direction is different from the first direction.

The housing may comprise: a lower plate defining a lower surface of the housing; and side plates defining side surfaces of the housing and supporting opposite sides of the plurality of secondary batteries, wherein the side plates comprise a first side plate and a second side plate which are opposed to each other, wherein the first side plate is joined to the first end of the second bracket, and the second side plate is joined to the second end of the second bracket.

The battery module may further comprise a lift hanger on at least a portion of a lower portion of the housing and comprising a catching groove.

At least some of the above and other features of the invention are set out in the claims.

### BRIEF DESCRIPTION OF THE DRAWINGS

The following drawings attached to the present specification illustrate some embodiments of the present disclosure and further describe aspects and features of the present disclosure together with the detailed description of the present disclosure. However, the present disclosure should not be construed as being limited to the drawings, in which:
FIG. 1 is a perspective view schematically illustrating a configuration of a secondary battery according to an embodiment of the present invention;
FIG. 2 is a cross-sectional view schematically illustrating a configuration of a secondary battery according to an embodiment of the present invention;
FIG. 3 is a perspective view schematically illustrating a battery module according to an embodiment of the present invention;
FIG. 4 is a perspective view schematically illustrating a housing of a battery module according to an embodiment of the present invention;
FIG. 5 is an enlarged perspective view illustrating a region "P" of FIG. 3 according to an embodiment of the present invention;
FIG. 6 is an enlarged perspective view illustrating the region "P" of FIG. 3 according to an embodiment of the present invention;
FIG. 7 is an enlarged perspective view illustrating the region "P" of FIG. 3 according to an embodiment of the present invention;
FIG. 8 is a perspective view schematically illustrating the battery module according to an embodiment of the present invention;
FIG. 9 is an enlarged perspective view illustrating a region "Q" of FIG. 3; and
FIG. 10 is an enlarged bottom perspective view illustrating the region "Q" of FIG. 3.

### DETAILED DESCRIPTION

Herein, some example embodiments of the present invention will be described in further detail with reference to the attached drawings. Prior to this, terms or words used in this specification and claims are not to be interpreted as being limited to ordinary or dictionary meanings and are to be interpreted as having meanings and concepts consistent with the technical idea of this invention based on the principle that the inventor can properly define the concept of the term in order to describe his or her invention in the best way. Accordingly, it is to be understood that the embodiments described herein, and the configurations illustrated in the drawings are only some example embodiments of the invention and do not necessarily represent all of the technical ideas of the invention, and that there may be various equivalents and modifications that may be replace for them at the time of filing. Further, when used herein, the words "comprise", "include," "comprising," and/or "including" specify the presence of the mentioned shapes, numbers, steps, operations, members, elements, and/or groups thereof and are not intended to exclude the presence or addition of one or more other shapes, numbers, operations, members, elements, and/or groups thereof. Also, when describing embodiments of the present invention, "may" or "may be" may include "one or more embodiments of the present invention."

In addition, in order to help understand the invention, the attached drawings may not be drawn to actual scale, and the dimensions of some components may be exaggerated. In addition, the same reference numbers may be assigned to the same components in different embodiments.

The statement that two objects for comparison are "equal" means the same or substantially the same. Therefore, the same or substantially the same may include deviations that are considered low in the art, for example, deviations of less than 5%. Additionally, uniformity of a parameter over a given region may imply uniformity from an average perspective.

Although "first," "second," and the like may be used to describe various components, the components are not limited by these terms. These terms are used to distinguish one component from another, and unless otherwise specifically stated, it is to be understood that a first component may also be a second component.

Throughout the specification, unless otherwise specifically stated, each element may be singular or plural.

When one component is disposed "on (or under)" a component or "above (or below)" the other component, it may mean not only that the one component is disposed in contact with the other component, but also that another component may be interposed between the one component and the other component disposed on (or under) the one component.

Also, when one component is described as being "joined," "coupled," or "connected" to another component, it is to be understood that the components may be directly connected or coupled to each other, but that another component may be "interposed" between the components, or that each component may be "joined," "coupled," or "connected" through one or more other components. Also, when a part is electrically coupled to another part, this includes not only direct connections, but also connections with one or more other elements therebetween.

Throughout the specification, "A and/or B" means A, B, or A and B unless otherwise stated to the contrary. That is, "and/or" includes any or all combinations of a plurality of the listed items. When "C to D" is stated, it means that greater than or equal to C and less than D unless otherwise specifically stated.

When a phrase such as "at least one of A, B, and C," "at least one of A, B, or C," "at least one selected from the group of A, B, and C," or "at least one selected from A, B, and C" is used to specify a list of elements A, B, and C, the phrase may refer to any suitable combination.

The term "use" may be considered synonymous with the term "utilize." As used herein, the terms "substantially," "about," and similar terms are used as terms of approximation, not as terms of degree, and are intended to take into account inherent variations in measured or calculated values that would be recognized by a person of ordinary skill in the art.

While terms such as "first," "second," "third," and the like may be used herein to describe various elements, components, regions, layers, and/or sections, such elements, components, regions, layers, and/or sections are not intended to be limited by such terms. The terms are used to distinguish one element, component, area, layer, or section from another element, component, area, layer, or section. Thus, a first element, component, region, layer, or section discussed below may be named a second element, component, region, layer, or section without departing from the teachings of the embodiments.

To describe the relationship of one element or feature to another element(s) or feature(s) as illustrated in the drawings, spatially relative terms such as "beneath," "below," "lower," "above," "upper," and the like may be used herein for ease of description. It is to be understood that spatially relative positions are intended to encompass different orientations of the device in use or operation in addition to the orientations depicted in the drawings. For example, when a device in a drawing is inverted, an element described as "under" or "below" another element is understood to be "on" or "above" the other element. Thus, the term "below" can encompass both up and down directions.

The terms used herein are intended to describe embodiments of the present disclosure and are not intended to limit the present disclosure.

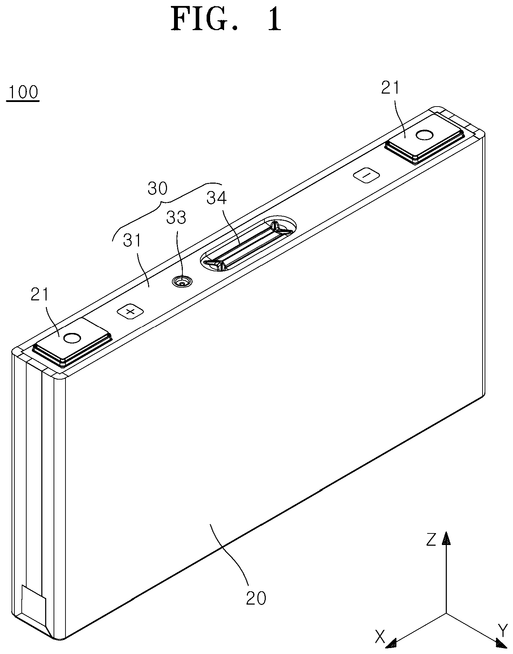

FIG. 1 is a perspective view schematically illustrating a configuration of a secondary battery 100 according to an embodiment of the present invention.

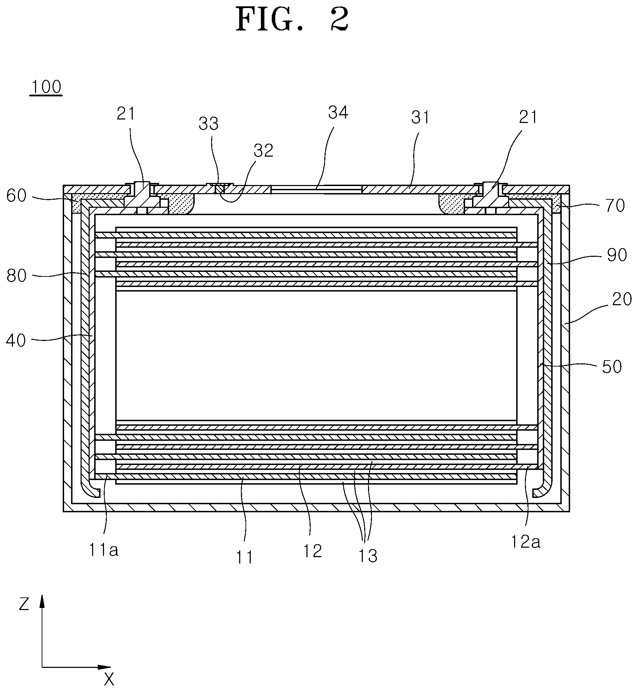

FIG. 2 is a cross-sectional view schematically illustrating a configuration of the secondary battery 100 according to an embodiment of the present invention.

The secondary battery 100 according to an embodiment of the present invention may include at least one electrode assembly formed by winding a positive electrode 11 and a negative electrode 12 with a separator 13, which is an insulator, interposed therebetween, a case 20 in which the electrode assembly is built-in or accommodated, and a cap assembly 30 coupled to an opening of the case 20.

Herein, the secondary battery 100 is described as an example of a prismatic lithium-ion secondary battery. However, the present invention is not limited thereto, and the secondary battery 100 may be a lithium polymer battery or a cylindrical battery, for example.

The positive electrode 11 and negative electrode 12 may include a coated portion that is a region in which a current collector formed of a thin sheet of metal foil is coated with an active material, and uncoated portions 11a, 12a that are regions in which the current collector is not coated with the active material.

In an embodiment, the positive electrode 11 and negative electrode 12 may be wound with the separator 13, which is an insulator, interposed therebetween. However, the present invention is not limited thereto, and the electrode assembly may have a structure in which positive and negative electrodes formed of a plurality of sheets are alternately stacked with a separator interposed therebetween.

The case 20 forms an overall exterior of the secondary battery 100 and may be formed of a conductive metal, such as aluminum, an aluminum alloy, or nickel-plated steel. Additionally, the case 20 may provide a space in which the electrode assembly is accommodated.

The cap assembly 30 may include a cap plate 31 that covers an opening of the case 20, and the case 20 and the cap plate 31 may be made of a conductive material. Here, a terminal 21 electrically connected to the positive electrode 11 or the negative electrode 12 may be installed to pass through the cap plate 31 and protrude outward.

In an embodiment, a pair of terminals 21 protruding outward from the cap plate 31 may be formed. The pair of terminals 21 may be connected to the positive electrode 11 and the negative electrode 12, respectively, and may function as a positive terminal and a negative terminal of the secondary battery 100.

In an embodiment, the terminals 21 may be electrically connected to current collectors including first and second current collectors 40, 50 (herein referred to as positive and negative electrode current collectors) welded and bonded to the positive uncoated portion 11a and negative uncoated portion 12a. For example, the pair of terminals 21 may be welded to the positive and negative electrode current collectors 40, 50, respectively. However, the present invention is not limited thereto, and, in an embodiment, the terminals 21 and the positive and negative electrode current collectors 40, 50 may be integrally formed. In an embodiment, an outer surface of an upper pillar of the terminal 21 may be threaded and may be fixed to the cap plate 31 with a nut.

However, the present invention is not limited thereto, and, in an embodiment, the terminal 21 may be formed with a rivet structure and may be riveted or welded to the cap plate 31.

In an embodiment, the cap plate 31 may be made of a thin plate and coupled to the opening of the case 20, and in the cap plate 31, an electrolyte inlet 32 in which a sealing cap 33 may be installed may be formed, and a vent 34 may be installed.

The vent 34 may be opened and closed in response to changes in an internal pressure of the case 20. That is, the vent 34 may be maintained in a closed state to seal the case 20 during normal operation of the electrode assembly. The vent 34 may be opened as the internal pressure of the case 20 rises to a set amount or higher due to overcharging or a fire occurrence and discharge emissions, such as flames, gases, etc. from the inside to the outside of the case 20.

In addition, an insulating member may be installed between the electrode assembly and the cap plate 31. In an embodiment, the insulating member may include first and second lower insulating members 60, 70, and each of the first and second lower insulating members 60, 70 may be installed between the electrode assembly and the cap plate 31.

Additionally, according to an embodiment, an end of a separating member that may be installed opposite to a side of the electrode assembly may be installed between the insulating member and the terminal 21.

In an embodiment, the separating member may include first and second separating members 80, 90.

Accordingly, the first and second separating members 80 and 90, which may be installed opposite to a side of the electrode assembly, may be installed between the first and second lower insulating members 60, 70 and the positive and negative electrode terminals 21.

As a result, the terminals 21 welded and coupled to the positive and negative electrode current collectors 40, 50 may be coupled to first ends of the first and second lower insulating members 60, 70 and the first and second separating members 80, 90.

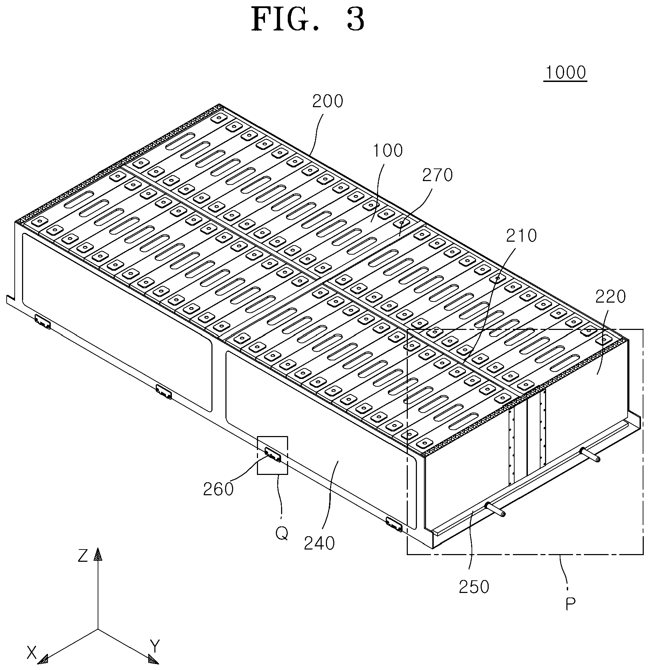

FIG. 3 is a perspective view schematically illustrating a battery module 1000 according to an embodiment of the present invention.

In FIG. 3, an X-axis indicates a width direction of the battery module 1000, a Y-axis indicates a longitudinal direction of the battery module 1000, and a Z-axis indicates a height direction of the battery module 1000.

The battery module 1000 according to an embodiment of the present invention includes a plurality of secondary batteries 100, a housing 200 for storing the plurality of secondary batteries 100, and a first bracket 210 that passes between at least two of the plurality of secondary batteries 100 in a first direction and has a first end and a second end each joined to the housing 200.

The battery module 1000 includes the plurality of secondary batteries 100. The secondary battery 100 may function as a unit structure to store and provide power in the battery module 1000.

The secondary battery 100 includes, for example, a secondary battery in which the case 20 of the secondary battery is formed in a prismatic shape. However, the shape of the secondary battery 100 applicable to the battery module 1000 according to an embodiment of the present invention is not limited thereto. Herein, an example in which the secondary battery 100 included in the battery module 1000 is formed in a prismatic shape will be described.

The plurality of secondary batteries 100 are disposed inside the housing 200. In this case, the housing 200 forms a general exterior of the battery module 1000. The housing 200 may function as a component that supports the plurality of secondary batteries 100 as a whole.

The plurality of secondary batteries 100 are disposed in the first direction inside the housing 200.

The first direction may be the same direction as a longitudinal direction (Y-axis) of the battery module 1000. For example, the secondary battery 100 includes a first side surface and a second side surface that are opposed to each other. In an embodiment, the first and second side surfaces include a wide side surface of the secondary battery 100. For example, each of the plurality of secondary batteries 100 may be disposed such that a first side surface thereof faces a second side surface of a neighboring secondary battery. In this case, the first direction is a direction from the first side surface toward the second side surface. In this case, the first direction is a direction in which a largest volume change of the secondary battery 100 occurs when the secondary battery 100 swells.

In an embodiment, the plurality of secondary batteries 100 may be arranged in m or more rows in a second direction inside the housing 200. Here, m is an integer greater than or equal to 2.

The second direction may be the same direction as the width direction (X-axis) of the battery module 1000.

For example, the plurality of secondary batteries 100 may include two or more battery assemblies arranged in a first direction, and the two or more battery assemblies may be arranged in two or more rows in the second direction. However, a number and arrangement form of the plurality of secondary batteries 100 are not limited thereto, and may be varied to have various numbers and arrangements.

The plurality of secondary batteries 100 may exhibit swelling behavior during repeated charging and discharging. In this case, since the battery module 1000 includes the plurality of secondary batteries 100 arranged in the first direction, if the secondary batteries 100 exhibit swelling behavior, the thickness of the battery module 1000 also becomes thicker in the first direction. In this case, the housing 200 storing the plurality of secondary batteries 100 receives a high expansion force.

Accordingly, the battery module 1000 includes the first bracket 210 inside the housing 200 to restrain the swelling caused by all or some of the plurality of secondary batteries 100. The battery module 1000 may restrain the force that causes the secondary batteries 100 to expand in the first direction through the first bracket 210.

The first bracket 210 is formed to pass between at least two of the plurality of secondary batteries 100 in the first direction. As described above, the first direction is, for example, a direction parallel to a direction in which the plurality of secondary batteries 100 are arranged in a row. For example, the first bracket 210 may be located to pass between two battery assemblies.

The first bracket 210 is joined to the housing 200. The first bracket 210 has a first end joined to a first side of the housing 200 and a second end joined to a second side of the housing 200. For example, the first bracket 210 may be joined to the housing 200 by welding.

The first bracket 210 enables the housing 200 to enhance a restraining force against swelling of the secondary battery 100. For example, the first bracket 210 may prevent or substantially prevent the volume of the battery module 1000 from expanding without a separate band or component.

Through this configuration, the battery module 1000 according to an embodiment of the present invention improves a restraining force of the housing 200, and/or enables the housing 200 to protect the secondary battery 100.

In an embodiment, the battery module 1000 may further include a cooling plate 250, a lift hanger 260, and/or a second bracket 270. Herein, each component of the battery module 1000 will be described in further detail.

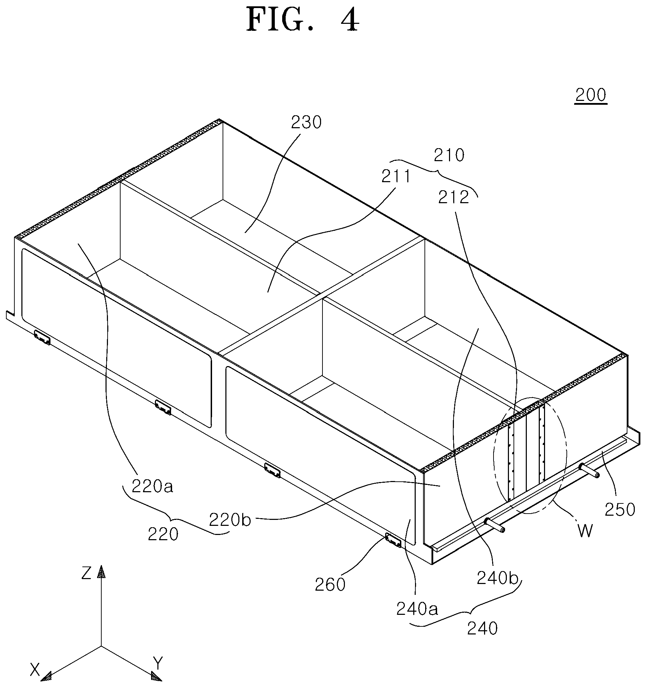

FIG. 4 is a perspective view schematically illustrating a housing 200 of the battery module 1000 according to an embodiment of the present invention.

As illustrated in FIG. 3, the housing 200 forms a general exterior of the battery module 1000. The housing 200 may function as a component that supports the plurality of secondary batteries 100 as a whole.

The housing 200 may further include end plates 220 and a lower plate 230. The housing 200 may further include side plates 240.

The lower plate 230 forms a lower surface of the housing 200. Accordingly, the lower plate 230 may be disposed under the secondary batteries 100. The lower plate 230 supports the plurality of secondary batteries 100 from below. In an embodiment, the housing 200 includes a plurality of prismatic secondary batteries 100, and the lower plate 230 may be formed in a generally quadrangular shape. In an embodiment, the lower plate 230 is formed relatively long in the longitudinal direction (Y-axis) of the battery module 1000 and relatively short in the width direction (X-axis) of the battery module 1000. Accordingly, the lower plate 230 may support the plurality of secondary batteries 100 arranged in the first direction from below.

The end plate 220 forms a portion of the plurality of side surfaces of the housing 200. For example, a pair of end plates 220 may be disposed on outer surfaces of both, or opposite, sides of the housing 200.

For example, the end plate 220 may be formed as a flat plate. The end plate 220 is coupled to at least one side surface of the lower plate 230 to form a portion of the plurality of side surfaces of the housing 200. For example, the end plate 220 may be coupled perpendicularly to a short side of the lower plate 230. In an embodiment, for example, the end plate 220 includes a pair of end plates 220a, 220b that are coupled to the short sides of a pair of lower plates 230.

In an embodiment, for example, the end plate 220 extends from the lower plate 230. For example, the end plate 220 extends from a surface formed to be short in the lower plate 230. The end plate 220 is bent and extends from the lower plate 230. For example, the end plate 220 is bent and extends from the lower plate 230 in a vertical direction. Accordingly, the end plate 220 may form a side surface that is located in the longitudinal direction (Y-axis) of the battery module 1000 at a side surface of the housing 200.

The end plate 220 supports both, or opposite, ends of the plurality of secondary batteries 100. For example, the end plate 220 supports both, or opposite, ends of the plurality of secondary batteries 100 arranged in the first direction.

The end plate 220 includes a first end plate 220a and a second end plate 220b facing the first end plate 220a. The end plate 220 may face each of the secondary batteries 100 located at both, or opposite, ends of the plurality of secondary batteries 100 arranged in the first direction. For example, the first end plate 220a may face a secondary battery 100 located at a first end of the plurality of secondary batteries 100 in the first direction, and the second end plate 220b may face a secondary battery 100 located at a second end of the plurality of secondary batteries 100 in the first direction.

The side plate 240 forms another portion of the plurality of side surfaces of the housing 200. The side plate 240 extends from the lower plate 230. For example, the side plate 240 extends from a surface formed to be long in the lower plate 230. In an embodiment, the side plate 240 is bent and extends from the lower plate 230, for example, the side plate 240 is bent and extends in a vertical direction from the lower plate 230. The side plate 240 may be located between the two end plates 220. Accordingly, the side plate 240 may form a side surface located in the width direction (X-axis) of the battery module 1000 at a side surface of the housing 200.

The side plate 240 includes a first side plate 240a and a second side plate 240b that face each other.

Additionally, the end plate 220 and the side plate 240 may form side surfaces of the housing 200.

The first bracket 210 is joined to the end plate 220. For example, the first bracket 210 has a first end joined to the first end plate 220a and a second end joined to the second end plate 220b.

In an embodiment, for example, the first bracket 210 is welded to the end plate 220 to form a welded portion W. Accordingly, the first bracket 210 may support the end plate 220 such that the end plate 220 is not pushed outward by the volume expansion of the secondary battery 100. For example, the first bracket 210 may be located across the inside of the housing 200 to support the two end plates 220a and 220b located on both, or opposite, sides of the housing 200. Accordingly, even if the secondary battery 100 pushes the housing 200 in the first direction, the first bracket 210 may support the housing 200 in a direction opposite to the force in which the secondary battery 100 pushes the housing 200.

In an embodiment, the battery module 1000 may further include a second bracket 270 that passes between at least two of the plurality of secondary batteries 100 in the second direction and is formed by joining a first end and a second end to the housing 200.

The second bracket 270 has a first end joined to the first side plate 240a and a second end joined to the second side plate 240b. The second bracket 270 may be fixed to the side plate 240 by any of various types of joining methods, for example, bolting, welding, fitting, and the like. Accordingly, the second bracket 270 may support the housing 200 in the second direction.

The first bracket 210 and the second bracket 270 may be disposed to intersect each other. For example, the first bracket 210 may be disposed parallel to the longitudinal direction (Y-axis) of the housing 200. For example, the second bracket 270 may be disposed parallel to a width direction (X-axis) of the housing 200. For example, the second bracket 270 may be disposed in a direction perpendicular to the first bracket 210. Accordingly, the second bracket 270 may support the first bracket 210 while helping the housing 200 to maintain a frame.

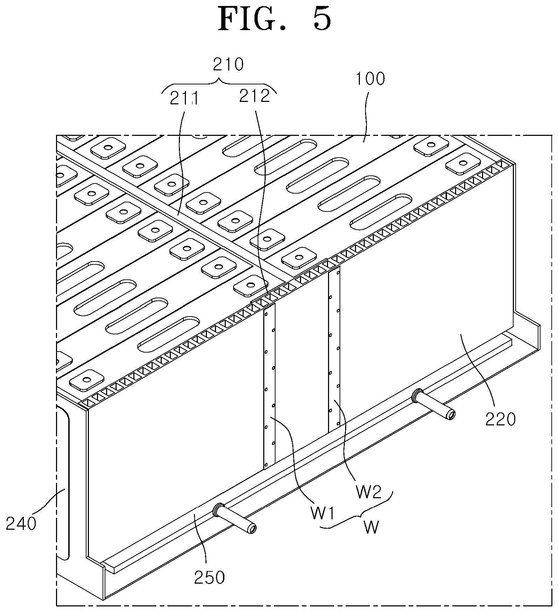

FIG. 5 is an enlarged perspective view illustrating a region "P" of FIG. 3 according to an embodiment.

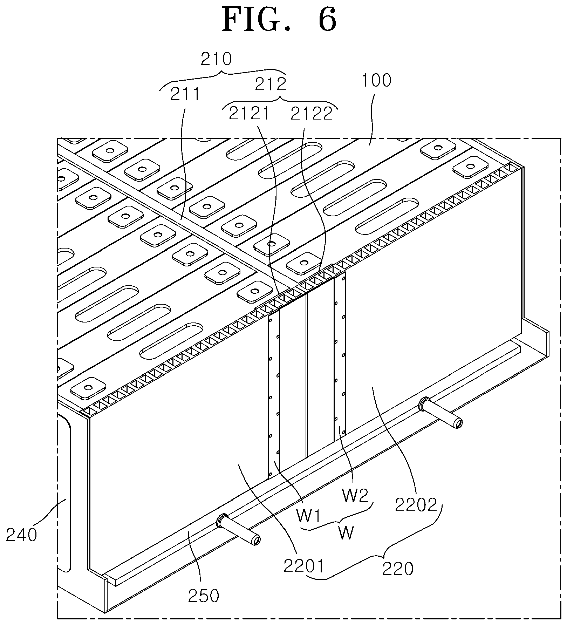

FIG. 6 is an enlarged perspective view illustrating the region "P" of FIG. 3 according to an embodiment.

The battery module 1000 according to an embodiment of the present invention, includes the secondary battery 100, the housing 200, and the first bracket 210. The housing 200 may further include the end plate 220 and the lower plate 230. The housing 200 may further include the side plate 240. In FIGS. 5 and 6, features of the joining of the first bracket 210 and the housing 200 will be described in further detail.

In an embodiment, the first bracket 210 includes a main body part 211 and a bent portion 212.

The main body part 211 is formed in a plate shape. The main body part 211 is formed to extend in a first direction. Accordingly, the main body part 211 is formed to extend in the direction in which the plurality of secondary batteries 100 is arranged.

The main body part 211 passes between at least two of the plurality of secondary batteries 100. For example, the main body part 211 passes between two battery assemblies. The main body part 211 has a first side formed toward the first end plate 220a and a second side formed toward the second end plate 220b. Additionally, the main body part 211 may be formed in a direction perpendicular to the lower plate 230.

The bent portion 212 is connected to the main body part 211. The bent portion 212 is formed, for example, on the first side and/or the second side of the main body part 211. The bent portion 212 is bent from the main body part 211 to form an end of the first bracket 210.

The bent portion 212 includes a first bent portion that is bent in a direction (e.g., an arbitrary direction) from the main body part 211 and a second bent portion that is bent in a direction opposite to the first bent portion. The first bent portion and the second bent portion may be connected to each other to form a flat surface, and the flat surface may be parallel to the end plate 220.

The bent portion 212 is joined to the end plate 220. For example, the first bent portion may be welded to the end plate 220 to form a first welded portion W1. For example, the second bent portion may be welded to the end plate 220 to form a second welded portion W2. Accordingly, the bent portion 212 may weld the first bracket 210 and the end plate 220 such that the first bracket 210 may support the end plate 220.

As illustrated in FIG. 5, for example, the housing 200 may include a pair of end plates 220.

In an embodiment, for example, the housing 200 includes the pair of end plates 220 located on a first end and a second end of the plurality of secondary batteries 100. For example, the secondary batteries 100 arranged in one or more rows may have the first end plate 220a disposed at a first end and the second end plate 220b disposed at a second end.

Accordingly, for example, one or more first brackets 210 may support an end plate 220 at an end. For example, as illustrated in FIG. 5, one first bracket 210 may support the pair of end plates 220 through both, or opposite, ends.

In an embodiment, as illustrated in FIG. 6, for example, the housing 200 may include one or more pairs of end plates 220.

For example, if the plurality of secondary batteries 100 are arranged in n rows (where n is an integer greater than or equal to 1), the end plate 220 may include m pairs of end plates (where m is an integer greater than or equal to 1 and less than or equal to n). In this case, the first end plate 220a may include m first end plates. In addition, the second end plate 220b may include m second end plates.

For example, when the secondary batteries 100 are arranged in a plurality of rows, the housing 200 may include a plurality of pairs of end plates 220. For example, when the secondary batteries 100 are arranged in two rows, the end plate 220 may include one pair or two pairs of end plates. For example, if the secondary batteries 100 are arranged in three rows, the end plate 220 may include one pair, two pairs, or three pairs of end plates.

For example, as illustrated in FIG. 6, the secondary batteries 100 may be arranged in two rows. In this case, one end plate 2201 (herein referred to as a first-row end plate) may be located at an end of the secondary batteries 100 arranged in the first row. That is, a pair of first-row end plates 2201 may be provided at each end of the secondary batteries 100 arranged in the first row. In addition, another end plate 2202 (herein referred to as a second-row end plate) may be located at a side of the secondary battery 100 arranged in the second row. That is, a pair of second-row end plates 2202 may be provided at both, or opposite, sides of the secondary batteries 100 arranged in the second row.

That is, if the plurality of secondary batteries 100 are arranged in two rows, the first end plate 220a and the second end plate 220b may respectively include two first-row end plates 2201 and two second-row end plates 2202.

Accordingly, for example, a first bracket 210 may support two or more end plates 220 at an end. In an embodiment, for example, the first bracket 210 includes a first direction bent portion 2121 that is bent in the first direction and a second direction bent portion 2122 that is bent in the second direction at the end. In this case, the first direction bent portion 2121 and the second direction bent portion 2122 may be opposite to each other. In this case, for example, the first direction bent portion 2121 may support the first-row end plate 2201, and the second direction bent portion 2122 may support the second-row end plate 2202.

Through this configuration, the housing 200 according to an embodiment of the present invention may increase a restraining force against the secondary battery 100.

In an embodiment, the housing 200 may further include the cooling plate 250.

The cooling plate 250 may be disposed inside the housing 200. For example, the cooling plate 250 may be disposed under the plurality of secondary batteries 100. For example, the cooling plate 250 may be disposed on the lower plate 230 or may be disposed inside the lower plate 230.

The cooling plate 250 may include a cooling flow path (not shown) in which a cooling fluid flows. The cooling fluid may include any of various types of heat exchange media. The cooling fluid may include, for example, a liquid, such as water and insulating oil, as well as a gas.

The cooling flow path may provide a flow path for cooling fluid supplied from the outside. The cooling flow path may cool the secondary batteries 100 by heat exchange between the cooling fluid flowing therein and the secondary battery 100. The cooling flow path may extend in a zigzag shape within the cooling plate 250 such that the cooling fluid is circulated throughout an entire area of the cooling plate 250.

In an embodiment, the cooling plate 250 may include a metallic material with high thermal conductivity, such as aluminum, but a material included in the cooling plate 250 is not limited thereto.

Through the above structure, the battery module 1000 may provide a method for increasing a supporting force of the housing 200 without deforming various structures of housing 200 or undergoing additional processes through the first bracket 210.

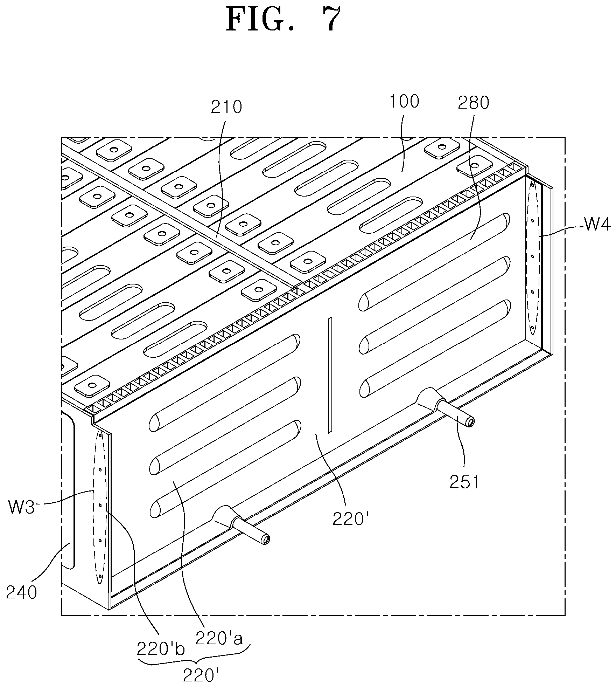

FIG. 7 is an enlarged perspective view illustrating the region "P" of FIG. 3 according to an embodiment.

The battery module 1000 according to an embodiment of the present invention, includes the secondary battery 100, the housing 200, and the first bracket 210. The housing 200 includes the lower plate 230, the side plate 240, and an end bracket 220'. In FIG. 7, features of the joining of the first bracket 210 and the housing 200 will be described in further detail through an example different from FIGS. 5 and 6.

In an embodiment, the first bracket 210 includes the main body part 211 and the bent portion 212. A description of the main body part 211 and the bent portion 212 is the same or similar to that described in FIG. 5.

The end bracket 220' forms a side surface of the housing 200 and supports both, or opposite, ends of the plurality of secondary batteries 100. That is, unlike that described in FIG. 5, the housing 200 may include the end bracket 220' instead of the end plate 220. The first bracket 210 may be joined to the end bracket 220'. For example, the first bracket 210 may be joined to the end bracket 220' by welding the bent portion 212 to the end bracket 220'.

In an embodiment, the end bracket 220' may include a same material as a material included in the first bracket 210. The end bracket 220' may include a material having high flexural rigidity. For example, the end bracket 220' may include aluminum (Al), stainless steel (SUS), iron (Fe), steel plate cold deep drawn extra (SPCE), or a combination thereof.

The end bracket 220' includes an end body part 220'a and an end bent portion 220'b.

The end body part 220'a forms a side surface of the housing 200. The end body part 220'a supports both, or opposite, ends of the plurality of secondary batteries. The end body part 220'a is joined to the first bracket 210.

In an embodiment, the end bent portion 220'b is bent and extends from the end body part 220'a. The end bent portion 220'b is joined to the side plate 240. For example, the end bent portion 220'b is bent and formed parallel to a direction in which the side plate 240 extends from the end body part 220'b. The end bent portion 220'b may extend to be parallel to the side plate 240 and may be joined to the side plate 240. For example, the end bent portion 220'b has a side welded to the first side plate 240a to form a third welded portion W3, and another side welded to the second side plate 240b to form a fourth welded portion W4.

Accordingly, the end bracket 220' may be firmly fixed to the housing 200.

In an embodiment, the housing 200 may further include an end block 280.

The end block 280 may be provided between the secondary battery 100 and the end bracket 220'. Accordingly, the end block 280 may assist the end bracket 220' to support the secondary battery 100 and prevent or substantially prevent deformation of the housing 200.

For example, the end block 280 may be formed in a plate shape. In an embodiment, for example, the end block 280 may be formed to have a size smaller than or equal to that of the end bracket 220'. The end block 280 may support the end bracket 220' on an inner surface of the end bracket 220'.

For example, if the plurality of secondary batteries 100 are arranged in n rows (where n is an integer greater than or equal to 1), the end blocks 280 may include l pairs of end blocks (where l is an integer greater than or equal to 1 and less than or equal to n). That is, the pair of end blocks 280 may be provided for each or some rows of the plurality of secondary batteries 100.

In an embodiment, for example, the end block 280 may be formed in a rod shape. In this case, a longitudinal direction of the end block 280 is formed, for example, in the X-axis direction. One or more end blocks 280 may be located on an inner surface of the end bracket 220' and may support the end bracket 220'. In this case, if two or more end blocks 280 are located, each end block 280 may be located at a different height on a surface of the end bracket 220'. In this case, the end block 280 may be fixed inside the housing 200 by being joined to the bent portion 212. In an embodiment, the end bracket 220' may be joined to the end block and fixed to the inside of the housing 200.

The end block 280 may include, for example, a same material as the end bracket 220'. The end block 280 may include, for example, aluminum (Al), stainless steel (SUS), iron (Fe), steel plate cold deep drawn extra (SPCE), or a combination thereof.

As such, the end block 280 may be located between the end bracket 220' and the secondary battery 100 and may function as a spacer at an end of the secondary battery 100. In addition, the end block 280 may further contribute to preventing or substantially preventing localized deformation of the housing 200 and/or the battery module 1000.

The battery module 1000 according to an embodiment of the present invention may further include the cooling plate 250.

The housing 200 may further include the cooling plate 250. The cooling plate 250 may be disposed inside the housing 200. For example, the cooling plate 250 may be disposed on the lower plate 230 or may be disposed inside the lower plate 230.

The cooling plate 250 may include the cooling flow path (not shown) that provides a flow path for cooling fluid supplied from the outside. For example, the cooling plate 250 may allow a refrigerant supplied through an inlet/outlet 251 to flow along the cooling flow path and the heat exchanged refrigerant to be discharged to the outside through the inlet/outlet 251. A description of the cooling flow path may be the same or similar to that described with reference to FIG. 5.

The end bracket 220' may cover the inlet/outlet 251 of the cooling flow path and may be located on the inlet/outlet 251 of the cooling flow path. In this way, the end bracket 220' may provide a structure that protects the inlet/outlet 251 of the cooling flow path.

The inlet/outlet 251 may be formed in a lower portion of the end bracket 220' so as to be connected to the cooling flow path and, for example, may be formed in a tube shape formed to pass through the end bracket 220'. However, a location and/or shape of the inlet/outlet 251 is not limited thereto.

Through this structure, the battery module 1000 may further improve an effect of the first bracket 210 supporting the housing 200. The battery module 1000 may provide a method for increasing the supporting force of the housing 200 even if all or some of the plurality of secondary batteries 100 are in a swelling state.

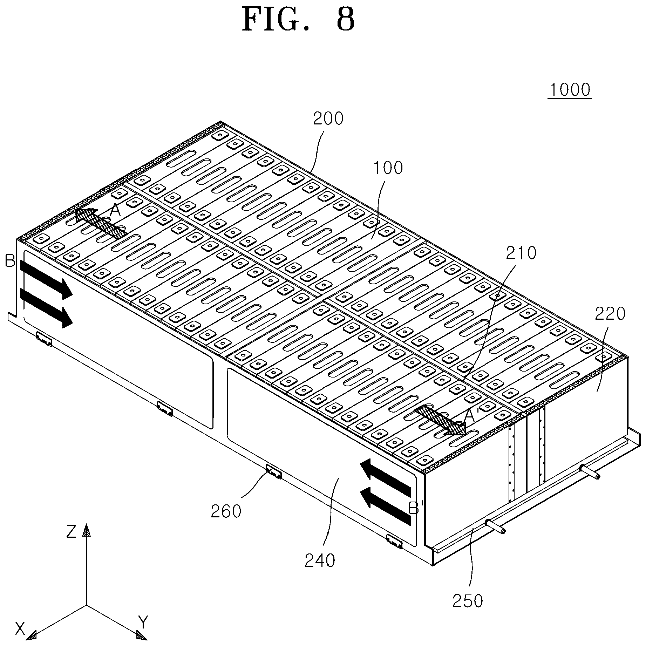

FIG. 8 is a perspective view schematically illustrating the battery module 1000 according to an embodiment of the present invention.

As described in FIGS. 3 to 7, the battery module 1000 according to an embodiment of the present invention includes the plurality of secondary batteries 100, the housing 200 that stores the plurality of secondary batteries 100, and the first bracket 210 that is joined to the housing 200 and is provided inside the housing 200.

When the plurality of secondary batteries 100 swell through charging and discharging and/or degradation, all or some of the plurality of secondary batteries 100 may expand along an axis that is the same as the longitudinal direction (Y-axis) of the battery module 1000. Accordingly, the housing 200 may receive a force that causes the secondary batteries 100 to expand in a direction A and a direction A'.

The first bracket 210 may support the housing 200 in a direction opposite to the direction in which the secondary battery 100 expands such that the housing 200 restrains the swelling of the secondary battery 100. For example, the first bracket 210 may support the housing 200 in a direction B and a direction B' such that the housing 200 restrains the swelling of the secondary battery 100.

In an embodiment, the first bracket 210 may have a tensile force greater than or equal to a certain strength (e.g., a predetermined strength). In this case, the predetermined strength is a strength greater than or equal to the expansion force generated by the secondary battery 100. For example, if the first bracket 210 includes a galvanized steel plate, the first bracket 210 may have a tensile force of 30,000 N or greater.

In addition, the first bracket 210 may be formed sufficiently thin. When the first bracket 210 is formed thick, a volume and/or weight of the battery module 1000 increases, and the capacity of the secondary battery 100 relative to the volume decreases. Therefore, in an embodiment, to form the first bracket 210 thinly, the first bracket 210 may be manufactured through a pressing process. In an embodiment, the first bracket 210 may be formed with a thickness of 0.5 mm or greater. For example, the first bracket 210 may be formed with a thickness of 1.0 mm or greater. On the other hand, if the first bracket 210 is formed with a thickness of less than 0.5 mm, the first bracket 210 may not provide a sufficient supporting force for the housing 200. Accordingly, in an embodiment, the first bracket 210 is formed to have a thickness of 0.5 mm or greater.

In this case, as the thickness of the first bracket 210 in the width direction (X-axis) of the battery module increases, the height of the battery module in the height direction (Z-axis) may decrease. For example, the height of the first bracket 210 may be set to satisfy a tensile force of a predetermined strength or higher based on the thickness of the first bracket 210. Table 1 below illustrates some examples in which the first bracket 210 is designed with various thicknesses and/or heights.

**Table 1**

| | Thickness (mm) | Height (mm) | Cross-section area (mm²) | Tensile force (N) |
|---|---|---|---|---|
| Example 1 | 1.0 | 116 | 116 | 31,320 |
| Example 2 | 1.5 | 78 | 117 | 31,590 |
| Example 3 | 2.0 | 58 | 116 | 31,320 |

As illustrated in Table 1, the first bracket 210 may be formed with various thicknesses and/or heights that may satisfy a tensile force (N) of a certain (e.g., predetermined) strength. Accordingly, the first bracket 210 may provide a sufficient supporting force for the housing 200.

In this way, the battery module 1000 according to one or more embodiments of the present invention may include a structure that restrains swelling without requiring a separate sub-module process or separate component for restraining swelling.

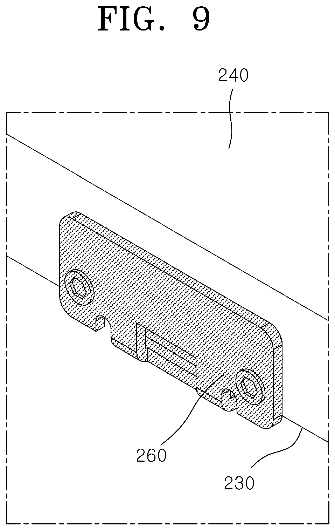

FIG. 9 is an enlarged perspective view illustrating a region "Q" of FIG. 3.

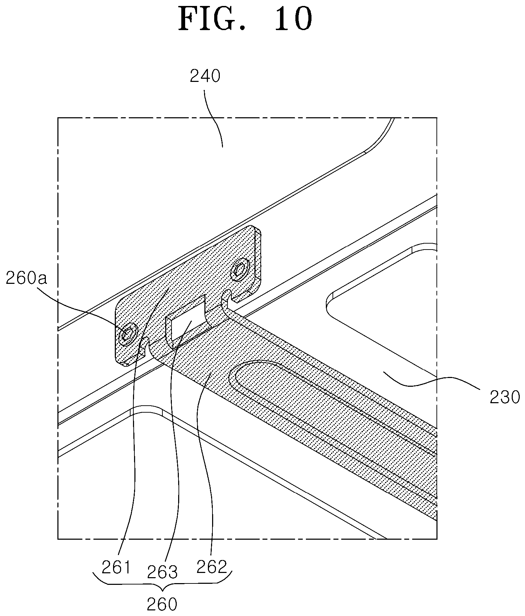

FIG. 10 is an enlarged bottom perspective view illustrating the region "Q" of FIG. 3.

The battery module 1000 according to an embodiment of the present invention described in FIGS. 3 to 8 may further include a lift hanger 260. The lift hanger 260 allows the battery module 1000 to be handled. For example, the lift hanger 260 may be hung on a hook to enable transportation of the battery module 1000 when the battery module 1000 is to be transported.

In an embodiment, the lift hanger 260 is formed on at least a portion of a lower portion of the housing 200. In an embodiment, for example, the lift hanger 260 is coupled to a lower surface of the lower plate 230. The lift hanger 260 may be coupled to the lower plate 230 by any of various types of coupling methods, such as bolting 260a, welding, fitting, and the like. The lift hanger 260 is formed on the lower portion of the housing 200 to allow the battery module 1000 to be transported safely.

The battery module 1000 may include a plurality of lift hangers 260. In this case, the plurality of lift hangers 260 may be appropriately spaced apart from each other to evenly distribute the weight of a heavy battery module 1000.

In an embodiment, the lift hanger 260 includes a first part 261 coupled to a side surface of the lower plate 230, a second part 262 that is bent and extends from the first part 261 so as to be coupled to a lower surface of the lower plate 230, and a catching groove 263. In this case, the catching groove 263 forms a groove in which, for example, a hook or the like may be inserted into the lift hanger 260 and fixed to the lift hanger 260.

Through such a structure, the battery module 1000 according to one or more embodiments of the present invention can be safely transported.

According to one or more embodiments of the present invention, a battery module of which swelling is restrained while reducing material costs is provided.

According to one or more embodiments of the present invention, a battery module of which swelling is restrained while improving process efficiency is provided.

However, aspects and effects obtained through the present invention are not limited to the above-described aspects and effects, and other technical aspects and effects that are not mentioned will be clearly understood by those skilled in the art from the description of the invention.

The present invention has been described with reference to some embodiments illustrated in the drawings, which are provided as examples, and those having ordinary skill in the art will understand that various modifications and equivalent other embodiments are possible.

Therefore, the scope of technical protection of the invention should be defined by the patent claims.

## Claims

1. A battery module comprising:
a plurality of secondary batteries;
a housing configured to accommodate the plurality of secondary batteries; and
a bracket arranged to pass between at least two secondary batteries of the plurality of secondary batteries in a first direction and comprising a first end and a second end joined to the housing.

2. The battery module as claimed in claim 1, wherein the first direction is a direction parallel to a direction in which the plurality of secondary batteries is arranged in a row.

3. The battery module as claimed in claim 1 or 2, wherein the housing comprises:
a lower plate defining a lower surface of the housing; and
end plates defining side surfaces of the housing and supporting opposite ends of the plurality of secondary batteries,
wherein the end plates comprise a first end plate and a second end plate which are opposite to each other.

4. The battery module as claimed in claim 3, wherein the bracket comprises the first end joined to the first end plate and the second end joined to the second end plate.

5. The battery module as claimed in claim 4, wherein the bracket comprises:
a main body part passing between the at least two second batteries of the plurality of secondary batteries; and
a bent portion that is connected to the main body part, bent from the main body part, and located at an end of the bracket,
wherein the bent portion is welded to the end plates such that the end plates are supported by the bracket.

6. The battery module as claimed in claim 3, 4 or 5, wherein secondary batteries of the plurality of secondary batteries are arranged in n rows, n being an integer greater than or equal to 1, and
the end plates comprise m pairs of end plates, m being an integer greater than or equal to 1 and less than or equal to n.

7. The battery module as claimed in claim 1, wherein the housing comprises:
a lower plate defining a lower surface of the housing;
side plates defining side surfaces of the housing and supporting opposite sides of the plurality of secondary batteries; and
end brackets defining side surfaces of the housing and supporting opposite ends of the plurality of secondary batteries,
wherein the end brackets comprise a same material as a material of the bracket.

8. The battery module as claimed in claim 7, wherein each of the end brackets comprises:
an end body part supporting an opposite end of the plurality of secondary batteries; and
an end bent portion that is connected to the end body part, bent from the end body part, and joined to a side plate of the side plates.

9. The battery module as claimed in claim 7 or 8, wherein the battery module comprises a cooling plate comprising a cooling flow path, and
the end bracket covers an inlet/outlet of the cooling flow path and is located on the cooling flow path.

10. The battery module as claimed in claim 7, 8 or 9, wherein the housing further comprises an end block arranged between an end bracket of the end brackets and the secondary battery and supporting the end bracket.

11. The battery module as claimed in any preceding claim, wherein the bracket satisfies a tensile force of 30,000 N or greater.

12. The battery module as claimed in any preceding claim, wherein the bracket has a thickness of 1.0 mm or greater.

13. The battery module as claimed in any preceding claim, further comprising a second bracket arranged to pass between at least two of the plurality of secondary batteries in a second direction and comprising a first end and a second end joined to the housing, and
the second direction is different from the first direction.

14. The battery module as claimed in claim 1, further comprising a second bracket arranged to pass between at least two of the plurality of secondary batteries in a second direction and comprising a first end and a second end joined to the housing, and the second direction is different from the first direction,
and wherein the housing comprises:
a lower plate defining a lower surface of the housing; and
side plates defining side surfaces of the housing and supporting opposite sides of the plurality of secondary batteries,
wherein the side plates comprise a first side plate and a second side plate which are opposed to each other,
wherein the first side plate is joined to the first end of the second bracket, and
the second side plate is joined to the second end of the second bracket.

15. The battery module as claimed in any preceding claim, further comprising a lift hanger on at least a portion of a lower portion of the housing and comprising a catching groove.
